# EUROPEAN PATENT SPECIFICATION

(11) **EP 1 865 791 B1**
(45) Date of publication and mention of the grant of the patent: **02.08.2017**
(21) Application number: 06707573.9
(22) Date of filing: 15.03.2006
(51) Int. Cl.: A23G 9/00

(54) **PROCESS FOR MANUFACTURING AERATED FROZEN CONFECTIONS**
VERFAHREN ZUR HERSTELLUNG VON BELÜFTETEN GEFRORENEN KONFEKTEN
PROCÉDÉ DE FABRICATION DES FRIANDISES AÉRÉES CONGELÉES

(30) Priority: 21.03.2005 EP 05102247
(43) Date of publication of application: 19.12.2007
(73) Proprietor: Nestec S.A., 1800 Vevey (CH)
(72) Inventor: WILLE, Hans-Juergen Erich, F-60000 St. Martin le Noeud, (FR); SCHLEGEL, Myriam, F-60000 Fouquenies (FR); VIEIRA, Josélio, Batista, York YO31 8 LG, (GB)
(74) Representative: Elleby, Gudrun
(86) International application number: PCT/EP2006/002394
(87) International publication number: WO 2006/099987

(56) References cited:
- WO-A-00/72697
- WO-A-01/06865
- GB-A- 1 446 144
- GB-A- 1 484 167
- US-A- 5 084 295
- US-A- 5 345 781

## Description

### Field of the invention

The present invention relates to the field of aerated frozen confections and particularly to a process for preparing such a confection.

### Background of the invention

Frozen confections, particularly milk-based frozen confections are traditionally made using ingredients such as: fat, milk solids-not-fat, sweeteners, stabilizers, emulsifiers and water. The various ingredients are mixed together, the mixture is then homogenized, pasteurized, cooled, optionally aged at about 2 to 6° C and deep-frozen with stirring with injection of air in a freezer to provide a degree of overrun of the order of 30 to 150%.

Frozen confections are particularly appreciated for their creamy and smooth characteristics. However, these products, in order to preserve their optimum organoleptic characteristics of smoothness, have to be stored and handled with care. Thus, temperature variations, even small, can be observed during storage, distribution or handling. This is particularly the case when the consumer buys a frozen confection, when they do not consume it straight away and when there is a gap between the time the product is taken from the deep-frozen section and when it is placed in the domestic freezer. In such circumstances, substantial or partial thawing of the product may occur before it is refrozen. Such cycles of temperature variation, called heat-shocks are responsible for the growth of ice crystals in the product. A crystallized texture thus results there from. This texture and the icy mouth feel accompanied by an impaired appearance of the product compromises or at the very least reduce its overall quality as perceived by the consumer.

Various gums and/or emulsifiers have been used as additives with the aim of improving the stability, the smoothness and the resistance of frozen confections to heat shocks. These may include guar gum, carob or guar seed flour, alginate, carboxymethyl cellulose, xanthan, carrageenan, synthetic or natural emulsifiers. The milk proteins contained in the milk dry extract participate in this stabilization due to their water-binding property.

However, the use of gums has the disadvantage of conferring on the product a texture, which is sometimes too firm or gummy.

Low temperature freezing, in particular Low Temperature Extrusion (LTE) technology has been developed to produce ice cream and frozen desserts with a finer microstructure of air bubbles and ice crystal size which provides the final product with a superior smooth texture. The fine microstructure of fat, ice crystals, air bubble and protein present a bigger surface area with high energy compared to less fine microstructure.

WO 0072697 describes a mechanically optimized design of a screw extruder which minimizes the increase in friction generated when the product is cooled in order to reach a temperature as low as possible.

US5375781 also deals with a specific geometry of an extruder and discloses in particular a double screw configuration wherein the two screws are positioned parallel to each other with their rotational axes.

Although the microstructure of the ice cream is kinetically stabilized by the low temperature processing, the dispersed ice crystals can rapidly lower their free energy by forming fewer and larger crystals, which leads to an icy texture. Therefore LTE has the drawback that the ice crystals are not stabilized in case the products are subjected to heat shocks.

WO 01/06865 is concerned with a process for the production of aerated frozen confections which are smooth and have resistance to heat shocks, which makes use of propylene glycol monostearate (PGMS), unsaturated monoglyceride and sorbitan tristearate as emulsifiers and milk solids-not-fat coming predominantly from skim milk.

GB-A- 1 484 167 is concerned with a method for making a partially frozen milk shake which comprises using cream, milk, glycerol as freezing point depressing agent, PGMS as emulsifier optionally together with glycerol monostearate and sodium stearoyl 2-lactylate, and carboxymethyl cellulose and carrageenan as stabilizers as well as other ingredients which are frozen in a conventional ice cream freezer to provide 50 to 100 % overrun.

The problem that the invention proposes to solve consists in improving the heat shock stability of aerated frozen products. In particular aerated frozen products produced by low temperature freezing, such as extrusion without compromising their organoleptic qualities.

### Summary of the invention

The present invention relates to a process for preparing an aerated frozen confection, with or without fat and comprising, sweeteners, milk solids-not-fat, water, emulsifier and stabilizer, which comprises by weight 0 to 12 % fat, 4 to 10 % milk solids-not-fat, 10 to 25 % sweeteners, up to 0.5 % stabilizers, at least 0.1 % propylene glycol monoester of fatty acid as primary emulsifier and has an overrun of 30 to 150 % by volume, the process comprising:
- dispersion, heating and homogenisation of the ingredients entering into the composition of a frozen confection at a temperature, a pressure and for a period sufficient to hydrate and pasteurize the mixture,
- providing the mixture with an overrun between 30 and 150%, and
- cooling the mixture to a temperature below - 11° C while agitating the mixture to provide a low temperature frozen aerated confection.

It has surprisingly been found that PGME is able to stabilize ice crystal growth of low temperature frozen ice cream. This is indeed surprising due to the sever conditions of the rapidly changing ice crystals structure when low temperature frozen ice cream is subjected to heat shocks.

In one advantageous embodiment of the invention, the present invention consists in a process for making aerated frozen confections comprising the following steps:
- dispersion, heating and homogenisation of the ingredients entering into the composition of a frozen confection at a temperature, a pressure and for a period sufficient to hydrate and pasteurize the mixture,
- cooling of the mixture to a temperature of between 2 and 8° C,
- optionally aging of the mixture at a temperature of between 2 and 6° C, with or without stirring, during 4 to 24 h,
- freezing to a temperature of between -4°C and -10° C, with incorporation of gas providing a degree of overrun of between 30 and 150%,
- further cooling the partially frozen aerated mixture in a screw extrusion down to temperature below -11° C and
- hardening of the mixture by deep-freezing to a temperature of between -20° C and -40° C.

The percentages indicated in the description relate to the percentages by weight except in the case of the overrun values, which are defined in % by volume.

### Detailed description of the invention

The process according to the invention makes use of low temperature freezing of the ice cream mixture. In the low temperature freezing the ice cream mixture is cooled to a temperature below conventional ice cream making namely below -11°C. In at least part of the cooling process the mixture is agitated which allow the product to be shaped and dosed even at low temperatures. It is preferred that the mixture is cooled while being agitated to a temperature between -12°C and -18°C. This provides the aerated mixture with a fine microstructure of air bubbles and ice crystal size, which provides the final product with a superior smooth texture.

The cooling and agitating of the mixture may be done by means of a screw extruder. The screw extruder may be a mono screw, twin screw or multiple screw extruder. The screw extruder has the advantage it provides a particular fine microstructure of air bubbles and ice crystal size discussed above.

Alternatively, the cooling and agitating of the mixture may be done by means of a scrape surface heat exchanger. Scrape surface heat exchangers are conventional freezer in the ice cream making industry. However, for the present invention it is important that the scrape surface can operate with the ice cream mixture at the low temperature conditions.

It has been found that a scrape surface heat exchanger with a Hybrid Desher design scraper and CO2 cooling media is particular suitable for carrying out the process of the invention. This type of freezer allows a cooling to low temperatures while agitating the mixture. An alternative cooling media may be ammonia. A scrape surface heat exchanger with a Hybrid Desher design scraper is available from GRAM Equipment A/S.

The cooling may confidently comprise a first cooling of the pasteurized mixture prior to the creation of the overrun to a temperature below -3°C, and a second agitated cooling following the creation of the overrun to a temperature below -11°C. Advantageously, the first cooling is to a temperature from -4C to -10°C.

In one preferred embodiment both the first cooling step and the aeration takes place in a conventional scrape surface heat exchange, and the second agitated cooling step is done by means of a screw extruder. Alternatively, it may be possible to carry out both the first and the second cooling steps in a screw extruder.

In another preferred embodiment the first and second cooling steps with aeration of the ice cream mixture are carrier out in a scrape surface heat exchanger with Hybrid Dasher design scraper. This has the advantage that the entire cooling may take place in one freezer barral.

Following the cooling steps of the low temperature aerated frozen confection obtained with the above-discussed process may then be shaped into the final shape of the product and packed.

The frozen confection may then be submitted to hardened by static deep-freezing to a temperature between -20°C to - 40°C.

Preferably, a frozen confection according to the present invention may comprise 2 to 12 % fat, 10 to 25% of sweeteners, 8 to 10 % of milk solids-not-fat of which 80 to 100 % are of whey origin, up to 0.5 % of stabilizers, at least 0.1 % of propylene glycol monoester of fatty acid as primary emulsifier and water as balance.

Thus the invention makes it possible to simultaneously improve the textural and organoleptic qualities of frozen confections, in particular after heat shock abuses.

The milk solids-not-fat used for making a frozen confection according to the invention may be powdered or concentrated defatted sweet whey, for example. They may include powdered or concentrated skim milk, for example. Milk solids-not-fat may also be derived from a commercial mixture of milk powder and whey proteins whose functionality has been modified by specific denaturation treatments.

Preferably, propylenglycol monoester of fatty acid (PGME) is used as a primary emulsifier in an amount of 0.1 to 0.5%, preferably in an amount of 0.1 to 0.25 % by weight and most preferably in an amount of between 0.15 to 0.20 % for getting the optimum smoothness. Preferably propylene glycol monostearate/palmitate is used.

The frozen confections prepared according to the invention may optionally comprise one additional emulsifier, for example, unsaturated monoglyceride or saturated mono-di glyceride in an amount of at least 5 % of the total emulsifiers, preferably in an amount of 0.04 to 0.16 % by weight as partial replacement of propylene glycol monoester of fatty acid.

The frozen confections prepared according to the present invention may comprise stabilizing agents; these may include carob flour, guar flour, alginates, carboxymethyl cellulose, xanthan, carrageenan, gelatin, starches used alone or in the form of a mixture at a dose of 0.1 to 0.5 %, preferably about 0.25 %.

The fat used may be a vegetable or animal fat, hydrogenated or otherwise fractionated, for example. It may be a fat of plant origin, preferably palm, coconut, soybean, rapeseed, olive, palm kernel oil, hydrogenated coconut oil, hydrogenated soybean oil, palm olein and their mixtures. It may also be a fat of animal origin, preferably butter fat and/or its fractions, which milk fat can be provided as cream.

The sweetener used may be sucrose, glucose, fructose or glucose syrup with DE (dextrose equivalent) varying from 20 to 42, or a mixture thereof, for example. The formulation of the product according to the invention may in addition comprise colourings such as beta-carotene, for example, and/or any type of flavourings or perfumes customarily used to flavour frozen confections, such as vanilla, strawberry or chocolate for example.

The compositions prepared according to the invention may optionally comprise additions such as fruit or fruit pieces, for example, or nuts, or hazelnuts, whole or in pieces, for example.

The choice of such ingredients makes it possible to obtain products with increased stability as well with a substantial reduction in the cost price. These savings are made through the partial replacement of the milk solids-not-fat traditionally used by whey. Furthermore, the organoleptic qualities of the frozen compositions prepared according to the invention are not reduced compared with the traditional products. Thus, the characteristics of smoothness and creaminess are increased and in particular, better preserved during the period of storage. In the frozen confections according to the invention, it is the use of propylene glycol monoester of fatty acid, as emulsifier which makes it possible to reduce remarkably the growth of water crystals in the products subjected to heat shock and thus it confers greater stability to heat shocks on the product.

For carrying out the process of the invention, the ingredients entering into the composition of a frozen confection prepared according to the present invention may be dispersed at around approximately 60 to 70°C for approximately 15 to 30 min., for example. The whole may be heated and homogenized at around 70 to 75°C, for example, at a pressure of the order of 140 to 220 bar, for example. These steps of dispersion, heating and homogenisation make it possible to bring about hydration of the stabilizer.

The mixture may then be pasteurized according to methods known to persons skilled in the art, for example at around 80 to 90°C for 10 to 30 s. The homogenisation-heating step may be carried out at a pasteurization temperature, which brings about, on its own, pasteurization of the mixture. The mixture may then be cooled to around 2 to 8°C by known means. This mixture may then be aged or otherwise for 4 to 24 h at around 2 to 6°C, for example, with or without stirring. After this aging step, the mixture may be frozen at around -3 to -10° C, and preferably at about -4.5 to -8° C with stirring with injection of gas so as to produce a degree of overrun of the order of 30 to 150 %, for example. The mixture obtained may then be further cooled by extrusion at temperature below -11° C in a refrigerated single or twin screw extruder and hardened by freezing at around -20 to-40° C, for example.

To evaluate the remarkable properties of the emulsifier applied, various textural, microscopic and macroscopic tests may be carried out.

Standard heat shock: the samples initially stored at -30° C are subjected, for 7 days, to temperature cycles of -8°C/12h followed by -20° C/12h. After 7 days of stabilisation at -30° C, the melting parameters are evaluated for these samples, which were subjected to a heat shock.

### Size and distribution of the ice crystals in an ice confection

An aliquot of ice confection is mixed with an equivalent quantity of glycerol and observed under a microscope at a temperature of -10° C. The measurement may be carried out in a chamber at -10° C equipped with microscope and a camera. It is thus possible to measure the mean diameter Dm _{(1,0)} of the crystals (in µm) in the finished products and in the products, which have been subjected to a heat shock (magnification 10x, respectively 20x depending on the crystals size).

The frozen confections prepared according to the present invention exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

A frozen confection prepared according to the present invention is therefore characterized in that it preserves its smooth texture and exhibits remarkable reduced growth of ice crystals due to ice recrystallization when submitted to heat shock conditions.

The expression "reduced crystal growth" is understood to mean an increase in the mean diameter Dm _{(1,0)} of the ice crystals of less than 50% after heat shock.

The invention is described below with reference to examples of preferred embodiments and modes of formulation. However, various adaptations and/or modifications may be made while remaining within the scope of the present invention.

### Examples

### Examples 1-4: Improved Texture Stability of Low Temperature Extruded LTE) frozen confection

From Table 1 below it can be noted that after 1 week heat shock the mean ice size of LTE product increases 211%. In comparison the regular processed product to same formulation, increases in mean ice size by 161%. This is to be expected, because with initially smaller ice crystals there is a much higher ice crystal surface area in the LTE product for potential liquefaction and re-deposition on the remaining (originally larger) crystals.

**Table 1**

| | Fresh product Median Dm _{(1,0)} | Heat-shock product Median Dm _{(1,0)} |
|---|---|---|
| Conventional Freezing | 39 | 63 |
| Drawing temperature: -5° C | | |
| LTE | 26 | 55 |
| Drawing temperature: -12.5° C | | |

Propylene glycol monoesters of fatty acids (PGME) have been shown previously to work as inhibitor of ice crystal growth. The crystal growth inhibiting effect of PGME is not expected to be affected by process conditions. The two techniques described above, LTE and addition of PGME were therefore combined to control the ice crystal growth in frozen confections produced by LTE. Examples of aerated frozen confections made according to the present invention. Frozen confections were produced according to the formulations indicated in Table 2 below.

**Table 2**

| Ingredients /Trials | Comp. Example | Example 1 | Example 2 | Example 3 | Example 4 |
|---|---|---|---|---|---|
| Milk Cream 35% Fat | 10.00 | 10.00 | 10.00 | 10.00 | 10.00 |
| Casein/Whey Protein Blend 20% | 10.50 | 10.50 | 10.50 | 10.50 | 10.50 |
| Cremodan 809 Creamline | 0.50 | - | - | - | - |
| PGMS | - | 0.10 | 0.15 | 0.20 | 0.25 |
| SMDG | - | 0.08 | 0.08 | 0.08 | 0.08 |
| Guar Gum | - | 0.15 | 0.15 | 0.15 | 0.15 |
| Locust Bean Gum | 0.10 | 0.15 | 0.15 | 0.15 | 0.15 |
| Invert glucose syrup DE 40 | 17.30 | 17.30 | 17.30 | 17.30 | 17.30 |
| Glucose syrup DE 36-40 | 4.30 | 4.30 | 4.30 | 4.30 | 4.30 |
| Water | 57.30 | 57.30 | 57.30 | 57.30 | 57.30 |

| | | | | | |
|---|---|---|---|---|---|
| Casein/whey protein blend: Nollibel LV154, Bel Industries PGMS: Propylene glycol monostearate PGMS SPV® from Danisco; SMDG: Saturated Mono-diglycerides: ADMUL® 60-04 from Kerry. | | | | | |

A combination of a traditional ice cream freezer and a twin screw low-temperature extruder was used for the frozen confection production. The conventional freezer (APV WCB) was used as the first cooling step and operated in a serial configuration with the low-temperature extruder (Schröder, Lubeck, Germany). The inlet temperature of the mixture in the freezer was + 4° C, the exit temperature on the freezer was - 5.0° C and the exit temperature - 15° C on the extruder. The extruder was set to 14 rpm and overrun to 100 % at a mix flow rate of 50 L/h.

Table 3 shows that like in conventional freezing, as the concentration of PGMS increases in the frozen confection, the ice crystal size reduces in LTE-produced frozen confection.

**Table 3**

| Recipe | Fresh product Median Dm _{(1,0)} | Heat-shock product Median Dm _{(1,0)} |
|---|---|---|
| Example 4 (0.25% PGMS) | 28 | 28 |
| Example 3 (0.20% PGMS) | 32 | 36 |
| Example 2 (0.15% PGMS) | 35 | 47 |
| Example 1 (0.10% PGMS) | 41 | 54 |
| Recipe Comp Ex (No PGMS) | 37 | 80 |

### Sensory analysis:

The samples are evaluated by a panel of people trained in the evaluation of texture. To that end, samples of examples of the invention are compared with the same after having been subjected to heat shock. The questionnaire distributed contains the descriptive attributes for smoothness, absence of large ice crystals in the frozen confection mass. The samples were thus evaluated by trained panellists who score each texture attribute in a scale from 0 to 100. The results are given in Table 4 below.

**Table 4**

| Recipe | Fresh product Smoothness | Heat-shock product Smoothness |
|---|---|---|
| Example 3 (0.20% PGMS) | 76 | 51 |
| Example 2 (0.15% PGMS) | 83 | 64 |
| Example 1 (0.10% PGMS) | 83 | 47 |
| Recipe Comp Ex (No PGMS) | 70 | 32 |

Table 4. Smoothness scores given by a panel of trained panel. 0 means low smoothness and 100 high smoothness.

We were surprised to find that the product smoothness does not progressively improve with the ice crystal size reduction. The table above show that the smoothness reduces significantly when PGMS concentration is increased above 0.15%. We believe that the relative loss of smoothness when the PGMS concentration exceeds 0.15% is due to high level of fat destabilization which produces a coarse texture.

## Claims

1. Process for preparing an aerated frozen confection, with or without fat and comprising, sweeteners, milk solids-not-fat, water, emulsifier and stabilizer, which comprises by weight 0 to 12 % fat, 4 to 10 % milk solids-not-fat, 10 to 25 % sweeteners, up to 0.5 % stabilizers, at least 0.1 % propylene glycol monoester of fatty acid as primary emulsifier and has an overrun of 30 to 150 % by volume, the process comprising:
- dispersion, heating and homogenisation of the ingredients entering into the composition of a frozen confection at a temperature, a pressure and for a period sufficient to hydrate and pasteurize the mixture,
- providing the mixture with an overrun between 30 and 150%, and
- cooling the mixture to a temperature below - 11 °C while agitating the mixture to provide a low temperature frozen aerated confection.

2. A process for preparing an aerated frozen confection, according to claim 1, wherein the cooling comprising,
- a first cooling of the pasteurized mixture prior to the creation of the overrun to a temperature below -3°C, and
- a second agitated cooling following the creation of the overrun to a temperature below -11°C.

3. A process for preparing an aerated frozen confection according to claims 1 or 2, wherein the cooling while agitating the mixture is to a temperature between -12°C and -18°C.

4. A process for preparing an aerated frozen confection according to any of the preceding claims, wherein the wherein the cooling and agitating of the mixture is by means of a screw extruder.

5. A process for preparing an aerated frozen confection according to any of claims 1 to 3, wherein the wherein the cooling and agitating of the mixture is done by means scrape surface heat exchanger.

6. A process for preparing an aerated frozen confection, according to any of the preceding claim, wherein the frozen aerated mixture is hardened by static deep-freezing to a temperature between -20°C to - 40°C.

7. Process for preparing an aerated frozen confection according to claim 1, comprising the further steps of
- cooling of the mixture to a temperature of between 2 and 8° C,
- optionally aging of the mixture at a temperature of between 2 and 6° C, without stirring, during 4 to 24 h,
- freezing to a temperature of between -4° C and -10°C, providing a degree of overrun of between 30 and 150 %,
- further cooling the aerated mixture by extrusion to a temperature below - 11 ° C in a screw extruded and
- hardening of the mixture by deep-freezing to a temperature of between -20° C and -40° C.

8. A process according to any of the preceding claims, wherein the frozen confection comprises 2 to 12 % fat by weight.

9. A process according to any of the preceding claims, wherein the milk solids-not-fat in the frozen confection comprises powdered or concentrated skim milk and/or mixtures with whey proteins.

10. A process according to any of the preceding claims, wherein the aerated frozen confection comprises at least one stabilizer chosen from the group comprising carob flour, guar flour, alginates, carboxymethyl cellulose, xanthan, carrageenan, gelatin, starches used alone or in the form of a mixture at a dose of 0.1 to 0.5 %, preferably about 0.25% by weight.

11. A process according to any of the preceding claims, wherein the sweeteners in the aerated frozen confection are chosen from the group comprising sucrose, glucose, fructose or glucose syrups or a mixture of these agents.

## Patentansprüche

1. Verfahren zum Zubereiten eines mit Luft durchsetzten, gefrorenen Konfekts, mit oder ohne Fett, und Süßungsmittel, fettfreie Milchtrockenmasse, Wasser, Emulgator und Stabilisator umfassend, das nach Gewicht 0 bis 12 % Fett, 4 bis 10 % fettfreie Milchtrockenmasse, 10 bis 25 % Süßungsmittel, bis zu 0,5 % Stabilisatoren, mindestens 0,1 % Propylenglycolmonoester von Fettsäure als Hauptemulgator umfasst und einen Luftaufschlag von 30 bis 150 Vol.-% aufweist, wobei das Verfahren umfasst:
- Dispergieren, Erhitzen und Homogenisieren der Inhaltsstoffe, die in die Zusammensetzung eines gefrorenen Konfekts einfließen, bei einer Temperatur, einem Druck und einer Dauer, die ausreichen, um das Gemisch zu hydrieren und zu pasteurisieren,
- Bereitstellen des Gemischs mit einem Luftaufschlag von zwischen 30 und 150 %, und
- Kühlen des Gemischs auf eine Temperatur von unter -11 °C, während das Gemisch gerührt wird, um ein gefrorenes, mit Luft durchsetztes Konfekt niedriger Temperatur bereitzustellen.

2. Verfahren zum Zubereiten eines mit Luft durchsetzten, gefrorenen Konfekts nach Anspruch 1, wobei das Kühlen umfasst
- ein erstes Kühlen des pasteurisierten Gemischs vor dem Erzeugen des Luftaufschlags auf eine Temperatur von unter -3 °C und
- ein zweites gerührtes Kühlen nach dem Erzeugen des Luftaufschlags auf eine Temperatur von unter -11 °C.

3. Verfahren zum Zubereiten eines mit Luft durchsetzten, gefrorenen Konfekts nach den Ansprüchen 1 oder 2, wobei das Kühlen, während das Gemisch gerührt wird, auf eine Temperatur zwischen -12 °C und -18 °C erfolgt.

4. Verfahren zum Zubereiten eines mit Luft durchsetzten, gefrorenen Konfekts nach einem der vorstehenden Ansprüche, wobei das Kühlen und Rühren des Gemischs mithilfe eines Schneckenextruders erfolgt.

5. Verfahren zum Zubereiten eines mit Luft durchsetzten, gefrorenen Konfekts nach einem der Ansprüche 1 bis 3, wobei das Kühlen und Rühren des Gemischs mithilfe eines Kratzkühlers erfolgt.

6. Verfahren zum Zubereiten eines mit Luft durchsetzten, gefrorenen Konfekts nach einem der vorstehenden Ansprüche, wobei das gefrorene, mit Luft durchsetzte Gemisch durch statisches Tiefkühlen auf eine Temperatur zwischen -20 °C bis -40 °C gehärtet wird.

7. Verfahren zum Zubereiten eines mit Luft durchsetzten, gefrorenen Konfekts nach Anspruch 1, ferner folgende Schritte umfassend
- Kühlen des Gemischs auf eine Temperatur von zwischen 2 und 8 °C,
- wahlweise Altern des Gemischs bei einer Temperatur zwischen 2 und 6 °C, ohne Rühren, für 4 bis 24 h,
- Gefrieren auf eine Temperatur von zwischen -4 °C und -10 °C und Bereitstellen eines Luftaufschlaggrads zwischen 30 und 150 %,
- weiteres Kühlen des mit Luft durchsetzten Gemischs durch Extrusion auf eine Temperatur von unter -11 °C in einem Schneckenextruder und
- Härten des Gemischs durch Tiefkühlen auf eine Temperatur zwischen -20 °C und -40 °C.

8. Verfahren nach einem der vorstehenden Ansprüche, wobei das gefrorene Konfekt 2 bis 12 Gew.-% Fett umfasst.

9. Verfahren nach einem der vorstehenden Ansprüche, wobei die fettfreie Milchtrockenmasse in dem gefrorenen Konfekt pulverförmige oder konzentrierte fettarme Milch und/oder Gemische mit Molkenproteinen umfassen.

10. Verfahren nach einem der vorstehenden Ansprüche, wobei das mit Luft durchsetzte, gefrorene Konfekt mindestens einen Stabilisator umfasst, der ausgewählt ist aus der Gruppe umfassend Johannisbrotmehl, Guarmehl, Alginate, Carboxymethylcellulose, Xanthan, Carrageen, Gelatine, Stärken, allein verwendet oder in Form eines Gemischs in einer Dosierung von 0,1 bis 0,5 Gew.-%, vorzugsweise etwa 0,25 Gew.-%.

11. Verfahren nach einem der vorstehenden Ansprüche, wobei die Süßungsmittel in dem mit Luft durchsetzten, gefrorenen Konfekt ausgewählt sind aus der Gruppe umfassend Saccharose, Glucose, Fructose oder Glucosesirupe oder einem Gemisch dieser Mittel.

## Revendications

1. Procédé de préparation d'une confiserie congelée aérée, avec ou sans matière grasse et comprenant des édulcorants, de la matière sèche dégraissée de lait, de l'eau, un émulsifiant et un agent stabilisant, qui comprend en poids de 0 à 12 % de matière grasse, de 4 à 10 % de matière sèche dégraissée de lait, de 10 à 25 % d'édulcorants, jusqu'à 0,5 % d'agents stabilisant, au moins 0,1 % de monoester de propylène glycol d'acide gras comme émulsifiant principal et présente un foisonnement de 30 à 150 % en volume, le procédé comprenant :
- la dispersion, le chauffage et l'homogénéisation des ingrédients entrant dans la composition d'une confiserie congelée à une température et une pression suffisantes et pendant une durée suffisante pour hydrater et pasteuriser le mélange,
- la fourniture du mélange avec un foisonnement compris entre 30 et 150 % et
- le refroidissement du mélange à une température inférieure à -11 °C tout en agitant le mélange afin de fournir une confiserie aérée congelée à basse température.

2. Procédé de préparation d'une confiserie congelée aérée, selon la revendication 1, dans lequel le refroidissement comprend,
- un premier refroidissement du mélange pasteurisé avant la création du foisonnement à une température inférieure à -3 °C, et
- un second refroidissement agité à la suite de création du foisonnement à une température inférieure à -11 °C.

3. Procédé de préparation d'une confiserie congelée aérée selon les revendications 1 ou 2, dans lequel le refroidissement pendant l'agitation du mélange se fait à une température entre -12 °C et -18 °C.

4. Procédé de préparation d'une confiserie congelée aérée selon l'une quelconque des revendications précédentes, dans lequel le refroidissement et l'agitation du mélange s'effectuent au moyen d'une extrudeuse à vis.

5. Procédé de préparation d'une confiserie congelée aérée selon l'une quelconque des revendications 1 à 3, dans lequel le refroidissement et l'agitation du mélange s'effectuent au moyen d'un échangeur de chaleur à surface raclée.

6. Procédé de préparation d'une confiserie congelée aérée selon l'une quelconque des revendications précédentes, dans lequel le mélange aéré congelé est durci par surgélation à une température entre -20 °C et -40 °C.

7. Procédé de préparation d'une confiserie congelée aérée selon la revendication 1, comprenant les étapes supplémentaires de
- refroidissement du mélange à une température entre 2 et 8 °C,
- vieillissement facultatif du mélange à une température entre 2 et 6 °C, sans agitation, pendant 4 à 24 h,
- congélation à une température entre -4 °C et -10 °C, fournissant un degré de foisonnement entre 30 et 150 %,
- refroidissement supplémentaire du mélange aéré par extrusion à une température inférieure à -11 °C dans une extrudeuse à vis et
- durcissement du mélange par surgélation à une température entre -20 °C et -40 °C.

8. Procédé selon l'une quelconque des revendications précédentes, dans lequel la confiserie congelée comprend de 2 à 12 % de matière grasse en poids.

9. Procédé selon l'une quelconque des revendications précédentes, dans lequel la matière sèche dégraissée de lait dans la confiserie congelée est constituée de lait écrémé concentré ou en poids et/ou de mélanges avec des protéines de lactosérum.

10. Procédé selon l'une quelconque des revendications précédentes, dans lequel la confiserie congelée aérée comprend au moins un agent stabilisant choisi dans le groupe constitué de farine de caroube, de farine de guar, alginates, carboxyméthylcellulose, xanthane, carraghénane, gélatine, amidons, utilisés seuls ou sous la forme d'un mélange à une dose de 0,1 à 0,5 %, de préférence environ 0,25 % en poids.

11. Procédé selon l'une quelconque des revendications précédentes, dans lequel les édulcorants dans la confiserie congelée aérée sont choisis dans le groupe constitué de saccharose, glucose, fructose ou sirops de glucose ou un mélange de ces agents.
